# EUROPEAN PATENT SPECIFICATION

(11) **EP 3 111 661 B1**
(45) Date of publication and mention of the grant of the patent: **28.09.2022**
(21) Application number: 15786825.8
(22) Date of filing: 27.04.2015
(51) Int. Cl.: H04N 21/436, H04N 21/4402, H04N 5/93, H04N 21/442

(54) **MEDIA CONTENT PLAYBACK MANAGEMENT**
MEDIENINHALTSWIEDERGABEVERWALTUNG
GESTION DE LECTURE DE CONTENU MULTIMÉDIA

(30) Priority: 28.04.2014 US 201414263750; 28.04.2014 US 201414263743
(43) Date of publication of application: 04.01.2017
(73) Proprietor: Sonos, Inc., Santa Barbara, CA 93101 (US)
(72) Inventor: VAN DER HEIDE, Maarten, Santa Barbara, CA 93101 (US); CHEN, Yean-Nian W., Santa Barbara, CA 93101 (US)
(74) Representative: EIP
(86) International application number: PCT/US2015/027761
(87) International publication number: WO 2015/168005

(56) References cited:
- US-A1- 2006 161 621
- US-A1- 2008 124 056
- US-A1- 2010 050 202
- US-A1- 2010 215 336
- US-A1- 2011 113 051
- US-A1- 2013 173 034
- US-A1- 2013 268 396
- US-B2- 8 386 413

## Description

The disclosure is related to consumer goods and, more particularly, to methods, systems, products, features, services, and other elements directed to media playback or some aspect thereof.

Options for accessing and listening to digital audio in an out-loud setting were severely limited until in 2003, when SONOS, Inc. filed for one of its first patent applications, entitled "Method for Synchronizing Audio Playback between Multiple Networked Devices," and began offering a media playback system for sale in 2005. The Sonos Wireless HiFi System enables people to experience music from virtually unlimited sources via one or more networked playback devices. Through a software control application installed on a smartphone, tablet, or computer, one can play what he or she wants in any room that has a networked playback device. Additionally, using the controller, for example, different songs can be streamed to each room with a playback device, rooms can be grouped together for synchronous playback, or the same song can be heard in all rooms synchronously.

Given the ever growing interest in digital media, there continues to be a need to develop consumer-accessible technologies to further enhance the listening experience.

US 2006/161621 A1 describes a method to enable individual users of media players to form a collaborative group, whereby the collaborative group of users may jointly suggest, approve, reject, vote, or otherwise select the media item to be synchronously played upon their individual media players. US2013/0173034 describes a method of detecting first and second playback conditions, comparing an audio track property of an audio track to the first and second playback conditions to determine if a first and/or second audio track property matches the first and/or second playback condition. The example method includes selecting the audio track for presentation to a user when the first playback condition matches the first and/or second audio track property and the second playback condition matches the first and/or second audio track property. In US2013/0173034, unlike the claimed solution, the selection of the audio track is an operation performed entirely either at the server or at the client. Thus, there is no need to transmit any metadata from the server to the client in order to perform an "on-the-fly" content selection.

According to a first aspect of the present invention there is provided a method as defined in appended claim 1. According to a second aspect of the present invention there is provided a computer readable medium as defined in appended claim 11. According to a third aspect of the present invention there is provided a computing device as defined in appended claim 12.

### BRIEF DESCRIPTION OF THE DRAWINGS

Features, aspects, and advantages of the presently disclosed technology may be better understood with regard to the following description, appended claims, and accompanying drawings where:
Figure 1 shows an example media playback system configuration in which certain embodiments may be practiced;
Figure 2 shows a functional block diagram of an example playback device;
Figure 3 shows a functional block diagram of an example control device;
Figure 4 shows an example controller interface;
Figure 5 shows an example media playback environment;
Figure 6 shows an example flow diagram of a method for managing playback of media content based on media preferences;
Figure 7 shows aspects of an example preference database;
Figure 8A shows a first example flow diagram for managing playback of media content;
Figure 8B shows a second example flow diagram for managing playback of media content;
Figure 8C shows a third example flow diagram for managing playback of media content;
Figure 8D shows an example flow diagram for providing media content based on media preferences of multiple user accounts; and
Figure 9 shows aspects of an example media preference database.

The drawings are for the purpose of illustrating example embodiments, but it is understood that the inventions are not limited to the arrangements and instrumentality shown in the drawings.

### DETAILED DESCRIPTION

### I. Overview

Some embodiments described herein involve managing playback of media based on media preferences. In particular, some embodiments involve preventing media content from being played based on negative media preferences associated with the media content. In one embodiment, a computing device, such as a device associated with a media playback system, may receive an indication that a media item is available to be played by the media playback system. The computing device may then identify a media preference associated with the media item. In one example, the media preference may be identified in a preference database associated with the media playback system. Based on the identified media preference, the computing device may then determine whether the media content should be played. If the identified media preference is a negative media preference, the computing device may determine that the media item should not be played and prevent the media item from being played.

In one example, the media playback system may be configured to play media content provided by a service provider. Accordingly, the service provider may provide information regarding media content that the service provider is and/or will be providing to the media playback system for playback. The information may include metadata identifying one or more of a track title, artist name, album name, and genre of the media content, among other information.

Upon receiving an indication that the media playback system is to play particular media content, the computing device may identify one or more media preferences associated with the media content. In one example, the computing device may access a preference database to identify the one or more media preferences. The preference database may be a database of media preferences associated with the media playback system, and may also be associated with any user profiles associated with the media playback system. In one case, the database may include media preferences received in association with specific media items. In another case, the database may include media preferences associated with groups of media items, such as media items within one or more genres, or media items by one or more artists. In either case, the preference database includes information identifying media content, and media preferences associated with the media content.

If a negative media preference is identified, the computing device may determine that the media content should not be played. In this case, the media playback system sends to the media playback system (or a playback device in the media playback system that would otherwise play the media content), an indication that the playback device is not to play the media content. Alternatively, if a positive media preference or no media preference is identified, the computing device may determine that the media content should be played as provided by the service provider. In this case, the media playback system may allow the media content to be played by the playback device, or send an indication that the media content can be played. Other examples, including those that will be discussed in the following sections, are also possible.

As indicated above, the present application involves managing media playback based on media preferences. In some examples a method may further involve maintaining, by the computing device, a plurality of user accounts associated with a media playback system, the media playback system comprising at least one playback device, receiving, by the computing device, user data identifying which of the plurality of user accounts are currently interfacing with the media playback system, receiving, by the computing device, media data identifying a media item to be played by the media playback system, identifying, by the computing device, for at least one of the plurality of user accounts that are currently interfacing with the media playback system, preference data associated with the media item, and determining, by the computing device, that the media item is not to be played by a media playback system, based on the identified preference data.

In one case, the media item is associated with a service provider, and the method further involves sending, by the computing device to the service provider, a transmission indicating a negative preference for the media item. In one case, the media item is associated with a service provider, and the method further involves sending, by the computing device to the service provider, a request for a different media item. The media item is associated with a first service provider, and the identified preference is associated with a second service provider. The media data comprises metadata associated with the media item. In one case, identifying the preference data associated with the media item involves searching a preference database for a media item entry related to the media item, and identifying a preference corresponding to the media item entry.

In another example, a device is provided. The device includes a processor and memory having stored thereon instructions executable by the processor to cause the device to perform functions. The functions may include maintaining a plurality of user accounts associated with a media playback system, the media playback system comprising at least one playback device, receiving user data identifying which of the plurality of user accounts are currently interfacing with the media playback system, receiving media data identifying a media item to be played by the media playback system, identifying for at least one of the plurality of user accounts that are currently interfacing with the media playback system, preference data associated with the media item, and determining that the media item is not to be played by a media playback system, based on the identified preference data.

The functions further include sending to the media playback system, a transmission indicating that the media item is not to be played. In one case, the media item is associated with a service provider, and the functions further include sending to the service provider, a transmission indicating a negative preference for the media item. In one case, the media item is associated with a service provider, and the functions further include sending to the service provider, a request for a different media item. The media item is associated with a first service provider, and the identified preference is associated with a second service provider.

In another example, a non-transitory computer readable medium is provided. The non-transitory computer readable medium has stored thereon instructions executable by a computing device to cause the computing device to perform functions. The functions may include maintaining a plurality of user accounts associated with a media playback system, the media playback system comprising at least one playback device, receiving user data identifying which of the plurality of user accounts are currently interfacing with the media playback system, receiving media data identifying a media item to be played by the media playback system, identifying for at least one of the plurality of user accounts that are currently interfacing with the media playback system, preference data associated with the media item, and determining that the media item is not to be played by a media playback system, based on the identified preference data.

The functions further include sending, by the computing device to the media playback system, a transmission indicating that the media item is not to be played. In one case, the media item is associated with a service provider, and the functions further include sending, by the computing device to the service provider, a transmission indicating a negative preference for the media item. In one case, the media item is associated with a service provider, and the functions further include sending, by the computing device to the service provider, a request for a different media item. In one case, the media data includes metadata associated with the media item. In one case, the function of identifying the preference data associated with the media item further includes searching a preference database for a media item entry related to the media item, and identifying a preference corresponding to the media item entry.

Some additional embodiments described herein involve managing playback of media content by a media playback system based on identified preference data associated with a user account interfacing with the media playback system. In particular, the embodiments may involve preventing media content from being played if the user account has a negative preference associated with the media content.

In one example, a computing device, such as a media system server associated with a media playback system may store and maintain a plurality of user accounts associated with the media playback system. The computing device may then receive user data identifying which of the plurality of user accounts is interfacing with the media playback system at a current time. For example, the user account may be interfacing with the media playback system when the user account is being used to access the media playback system, when the user account is logged on to the media playback system, and/or when a controller device associated with the user account is in communicative range of the media playback system. In one case, the user data may indicate that users associated with some of the plurality of user accounts are within a physical proximity of the media playback system, and consequently may experience media content played by the media playback system.

The computing device may also receive media data identifying a media item to be played by the media playback system. In one example, the media item may be a music track provided by a service provider in response to an input via a first user account of the plurality of user accounts. In one case, the service provider may provide the music track based on media preferences associated with the first user account. In another example, the music track may be part of a playlist provided by the service provider according to a request via the first user account. In either case, the music track that is to be played may be provided at least partially based on preferences associated with the first user account.

In one example, the user data may indicate that a second user account is interfacing with the media playback system, and accordingly, one or more users associated with the second user account may be present where media content is or will be played by the media playback system. Accordingly, media preferences associated with the second user account may also be considered when the media playback system is, or will be playing the music track.

In particular, the computing device may identify, for at least the second user account, preference data associated with the media item. The media data may include metadata identifying the media item, and the computing device may use the metadata to identify preference data associated between the media item and the second user account. In one example, the preference data may be identified in a preference database associated with the media playback system. The computing device may then determine whether the media item should be played based on the identified preference data.

If the identified preference data indicates a negative preference, the computing device may determine the media item should not be played, and send a transmission to the media playback system indicating that the media item is not to be played. Alternatively, if the identified preference data indicates a positive preference, or if no preference is identified, the media playback system may proceed to play the media item.

While the above examples refer to a first user account and a second user account, one having ordinary skill in the art will appreciate that the plurality of user accounts may include additional accounts, and that preferences associated with the additional accounts may also be identified and considered when the media playback system plays media content. In addition, while the above examples refer to actions performed by a computing device, such as a media system server associated with a media playback system, similar actions may alternatively be performed at least in part, by one or more devices in the media playback system. Other examples are also possible.

As indicated above, the examples provided herein involve managing playback of media content by a media playback system based on identified preference data associated with one of a plurality of user accounts interfacing with the media playback system. In one example, a method is provided. The method involves receiving, by a computing device, data indicating that a media item is available to be played by a media playback system, based on the received data, identifying, by the computing device, in a preference database associated with the media playback system, a media preference, based on the identified media preference, determining, by the computing device, that the media item is not to be played by the media playback system, and sending, by the computing device, an indication that the media item is not to be played.

In one case, the method further involves receiving, by the computing device, second data indicating that a second media item is available to be played by the media playback system, based on the second data, identifying, by the computing device, in the preference database associated with the media playback system, a second media preference, based on the identified second media preference, determining, by the computing device, that the second media item is to be played by the media playback system, and causing, by the computing device, the second media item to be played. In one case, the media item is provided by a service provider, and the method further involves sending to the service provider, by the computing device, a request for a different media item. The data is received from a first service provider, and the identified media preference is associated with a second service provider. In one case, the data identifies a service-provider identification of the media item. In one case, the media playback system includes one or more playback devices configurable to play media content in synchrony.

In another example, a computing device is provided. The computing device includes a processor and memory having stored thereon instructions executable by the processor to cause the computing device to perform functions. The functions include receiving data indicating that a media item is available to be played by a media playback system, based on the received data, identifying a media preference, based on the identified media preference, determining that the media item is to be played by the media playback system, and causing the media item to be played.

In one case, the functions further include sending to the media playback system, an indication that the media item is to be played. In one case, the function for identifying a media preference includes identifying the media preference in a preference database affiliated with the media playback system. The data is received from a first service provider, and the identified media preference is associated with a second service provider. In one case, the data identifies a service-provider identification of the media item. In one case, the media playback system includes one or more playback devices configurable to play media content in synchrony.

In another example, a non-transitory computer readable medium is provided. The non-transitory computer readable medium has stored thereon instructions executable by a computing device to cause the computing device to perform functions. The functions include receiving data indicating that a media item is available to be played by a media playback system, based on the received data, identifying a media preference, and based on the identified media preference, determining one of the following: (a) that the media item is not to be played by the media playback system and (b) that the media item is to be played by the media playback system. The functions further include, if a determination is made that the media item is not to be played by the media playback system, sending an indication that the media item is not to be played, and if a determination is made that the media item is to be played, causing the media item to be played.

In one case, the function of causing the media item to be played includes sending to the media playback system, an indication that the media item is to be played. In one case, the media item is provided by a service provider, and the function of sending an indication that the media item is not to be played includes sending to the service provider, a request for a different media item. The function for identifying a media preference includes identifying the media preference in a preference database affiliated with the media playback system. In one case, the data identifies a service-provider identification of the media item. In one case, the media playback system includes one or more playback devices configurable to play media content in synchrony.

It will be understood by one of ordinary skill in the art that this disclosure includes numerous other embodiments.

### II. Example Operating Environment

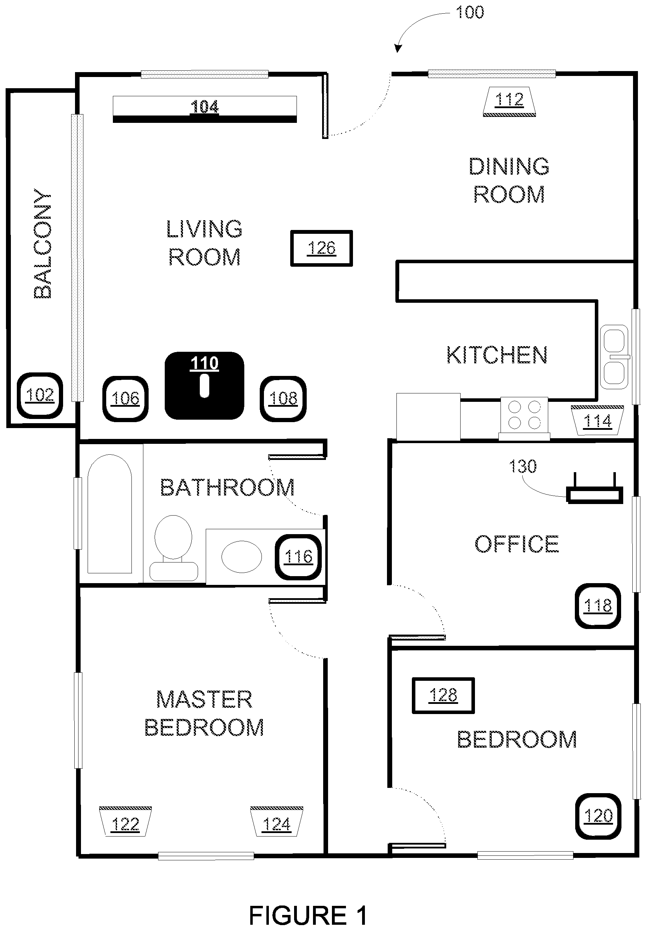

Figure 1 shows an example configuration of a media playback system 100 in which one or more embodiments disclosed herein may be practiced or implemented. The media playback system 100 as shown is associated with an example home environment having several rooms and spaces, such as for example, a master bedroom, an office, a dining room, and a living room. As shown in the example of Figure 1, the media playback system 100 includes playback devices 102-124, control devices 126 and 128, and a wired or wireless network router 130.

Further discussions relating to the different components of the example media playback system 100 and how the different components may interact to provide a user with a media experience may be found in the following sections. While discussions herein may generally refer to the example media playback system 100, technologies described herein are not limited to applications within, among other things, the home environment as shown in Figure 1. For instance, the technologies described herein may be useful in environments where multi-zone audio may be desired, such as, for example, a commercial setting like a restaurant, mall or airport, a vehicle like a sports utility vehicle (SUV), bus or car, a ship or boat, an airplane, and so on.

### a. Example Playback Devices

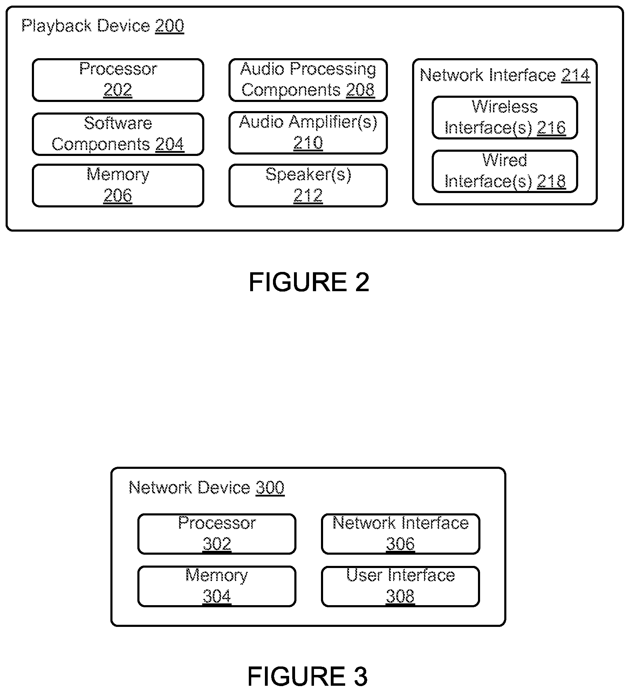

Figure 2 shows a functional block diagram of an example playback device 200 that may be configured to be one or more of the playback devices 102-124 of the media playback system 100 of Figure 1. The playback device 200 may include a processor 202, software components 204, memory 206, audio processing components 208, audio amplifier(s) 210, speaker(s) 212, and a network interface 214 including wireless interface(s) 216 and wired interface(s) 218. In one case, the playback device 200 may not include the speaker(s) 212, but rather a speaker interface for connecting the playback device 200 to external speakers. In another case, the playback device 200 may include neither the speaker(s) 212 nor the audio amplifier(s) 210, but rather an audio interface for connecting the playback device 200 to an external audio amplifier or audio-visual receiver.

In one example, the processor 202 may be a clock-driven computing component configured to process input data according to instructions stored in the memory 206. The memory 206 may be a tangible computer-readable medium configured to store instructions executable by the processor 202. For instance, the memory 206 may be data storage that can be loaded with one or more of the software components 204 executable by the processor 202 to achieve certain functions. In one example, the functions may involve the playback device 200 retrieving audio data from an audio source or another playback device. In another example, the functions may involve the playback device 200 sending audio data to another device or playback device on a network. In yet another example, the functions may involve pairing of the playback device 200 with one or more playback devices to create a multichannel audio environment.

Certain functions may involve the playback device 200 synchronizing playback of audio content with one or more other playback devices. During synchronous playback, a listener will preferably not be able to perceive time-delay differences between playback of the audio content by the playback device 200 and the one or more other playback devices. U.S. Patent No. 8,234,395 entitled, "System and method for synchronizing operations among a plurality of independently clocked digital data processing devices, provides in more detail some examples for audio playback synchronization among playback devices.

The memory 206 may further be configured to store data associated with the playback device 200, such as one or more zones and/or zone groups the playback device 200 is a part of, audio sources accessible by the playback device 200, or a playback queue that the playback device 200 (or some other playback device) may be associated with. The data may be stored as one or more state variables that are periodically updated and used to describe the state of the playback device 200. The memory 206 may also include the data associated with the state of the other devices of the media system, and shared from time to time among the devices so that one or more of the devices have the most recent data associated with the system. Other embodiments are also possible.

The audio processing components 208 may include one or more digital-to-analog converters (DAC), an audio preprocessing component, an audio enhancement component or a digital signal processor (DSP), and so on. In one embodiment, one or more of the audio processing components 208 may be a subcomponent of the processor 202. In one example, audio content may be processed and/or intentionally altered by the audio processing components 208 to produce audio signals. The produced audio signals may then be provided to the audio amplifier(s) 210 for amplification and playback through speaker(s) 212. Particularly, the audio amplifier(s) 210 may include devices configured to amplify audio signals to a level for driving one or more of the speakers 212. The speaker(s) 212 may include an individual transducer (*e.g.,* a "driver") or a complete speaker system involving an enclosure with one or more drivers. A particular driver of the speaker(s) 212 may include, for example, a subwoofer *(e.g.,* for low frequencies), a mid-range driver *(e.g.,* for middle frequencies), and/or a tweeter (*e.g.,* for high frequencies). In some cases, each transducer in the one or more speakers 212 may be driven by an individual corresponding audio amplifier of the audio amplifier(s) 210. In addition to producing analog signals for playback by the playback device 200, the audio processing components 208 may be configured to process audio content to be sent to one or more other playback devices for playback.

Audio content to be processed and/or played back by the playback device 200 may be received from an external source, such as via an audio line-in input connection (*e.g.,* an auto-detecting 3.5mm audio line-in connection) or the network interface 214.

The network interface 214 may be configured to facilitate a data flow between the playback device 200 and one or more other devices on a data network. As such, the playback device 200 may be configured to receive audio content over the data network from one or more other playback devices in communication with the playback device 200, network devices within a local area network, or audio content sources over a wide area network such as the Internet. In one example, the audio content and other signals transmitted and received by the playback device 200 may be transmitted in the form of digital packet data containing an Internet Protocol (IP)-based source address and IP-based destination addresses. In such a case, the network interface 214 may be configured to parse the digital packet data such that the data destined for the playback device 200 is properly received and processed by the playback device 200.

As shown, the network interface 214 may include wireless interface(s) 216 and wired interface(s) 218. The wireless interface(s) 216 may provide network interface functions for the playback device 200 to wirelessly communicate with other devices (*e.g.,* other playback device(s), speaker(s), receiver(s), network device(s), control device(s) within a data network the playback device 200 is associated with) in accordance with a communication protocol *(e.g.,* any wireless standard including IEEE 802.1 1a, 802.11b, 802.11g, 802.1 In, 802.1 1ac, 802.15, 4G mobile communication standard, and so on). The wired interface(s) 218 may provide network interface functions for the playback device 200 to communicate over a wired connection with other devices in accordance with a communication protocol (*e.g.,* IEEE 802.3). While the network interface 214 shown in Figure 2 includes both wireless interface(s) 216 and wired interface(s) 218, the network interface 214 may in some embodiments include only wireless interface(s) or only wired interface(s).

In one example, the playback device 200 and one other playback device may be paired to play two separate audio components of audio content. For instance, playback device 200 may be configured to play a left channel audio component, while the other playback device may be configured to play a right channel audio component, thereby producing or enhancing a stereo effect of the audio content. The paired playback devices (also referred to as "bonded playback devices") may further play audio content in synchrony with other playback devices.

In another example, the playback device 200 may be sonically consolidated with one or more other playback devices to form a single, consolidated playback device. A consolidated playback device may be configured to process and reproduce sound differently than an unconsolidated playback device or playback devices that are paired, because a consolidated playback device may have additional speaker drivers through which audio content may be rendered. For instance, if the playback device 200 is a playback device designed to render low frequency range audio content (i.e. a subwoofer), the playback device 200 may be consolidated with a playback device designed to render full frequency range audio content. In such a case, the full frequency range playback device, when consolidated with the low frequency playback device 200, may be configured to render only the mid and high frequency components of audio content, while the low frequency range playback device 200 renders the low frequency component of the audio content. The consolidated playback device may further be paired with a single playback device or yet another consolidated playback device.

By way of illustration, SONOS, Inc. presently offers (or has offered) for sale certain playback devices including a "PLAY:1," "PLAY:3," "PLAY:5," "PLAYBAR," "CONNECT:AMP," "CONNECT," and "SUB." Any other past, present, and/or future playback devices may additionally or alternatively be used to implement the playback devices of example embodiments disclosed herein. Additionally, it is understood that a playback device is not limited to the example illustrated in Figure 2 or to the SONOS product offerings. For example, a playback device may include a wired or wireless headphone. In another example, a playback device may include or interact with a docking station for personal mobile media playback devices. In yet another example, a playback device may be integral to another device or component such as a television, a lighting fixture, or some other device for indoor or outdoor use.

### b. Example Playback Zone Configurations

Referring back to the media playback system 100 of Figure 1, the environment may have one or more playback zones, each with one or more playback devices. The media playback system 100 may be established with one or more playback zones, after which one or more zones may be added, or removed to arrive at the example configuration shown in Figure 1. Each zone may be given a name according to a different room or space such as an office, bathroom, master bedroom, bedroom, kitchen, dining room, living room, and/or balcony. In one case, a single playback zone may include multiple rooms or spaces. In another case, a single room or space may include multiple playback zones.

As shown in Figure 1, the balcony, dining room, kitchen, bathroom, office, and bedroom zones each have one playback device, while the living room and master bedroom zones each have multiple playback devices. In the living room zone, playback devices 104, 106, 108, and 110 may be configured to play audio content in synchrony as individual playback devices, as one or more bonded playback devices, as one or more consolidated playback devices, or any combination thereof. Similarly, in the case of the master bedroom, playback devices 122 and 124 may be configured to play audio content in synchrony as individual playback devices, as a bonded playback device, or as a consolidated playback device.

In one example, one or more playback zones in the environment of Figure 1 may each be playing different audio content. For instance, the user may be grilling in the balcony zone and listening to hip hop music being played by the playback device 102 while another user may be preparing food in the kitchen zone and listening to classical music being played by the playback device 114. In another example, a playback zone may play the same audio content in synchrony with another playback zone. For instance, the user may be in the office zone where the playback device 118 is playing the same rock music that is being playing by playback device 102 in the balcony zone. In such a case, playback devices 102 and 118 may be playing the rock music in synchrony such that the user may seamlessly (or at least substantially seamlessly) enjoy the audio content that is being played out-loud while moving between different playback zones. Synchronization among playback zones may be achieved in a manner similar to that of synchronization among playback devices, as described in previously referenced U.S. Patent No. 8,234,395.

As suggested above, the zone configurations of the media playback system 100 may be dynamically modified, and in some embodiments, the media playback system 100 supports numerous configurations. For instance, if a user physically moves one or more playback devices to or from a zone, the media playback system 100 may be reconfigured to accommodate the change(s). For instance, if the user physically moves the playback device 102 from the balcony zone to the office zone, the office zone may now include both the playback device 118 and the playback device 102. The playback device 102 may be paired or grouped with the office zone and/or renamed if so desired via a control device such as the control devices 126 and 128. On the other hand, if the one or more playback devices are moved to a particular area in the home environment that is not already a playback zone, a new playback zone may be created for the particular area.

Further, different playback zones of the media playback system 100 may be dynamically combined into zone groups or split up into individual playback zones. For instance, the dining room zone and the kitchen zone 114 may be combined into a zone group for a dinner party such that playback devices 112 and 114 may render audio content in synchrony. On the other hand, the living room zone may be split into a television zone including playback device 104, and a listening zone including playback devices 106, 108, and 110, if the user wishes to listen to music in the living room space while another user wishes to watch television.

### c. Example Control Devices

Figure 3 shows a functional block diagram of an example control device 300 that may be configured to be one or both of the control devices 126 and 128 of the media playback system 100. As shown, the control device 300 may include a processor 302, memory 304, a network interface 306, and a user interface 308. In one example, the control device 300 may be a dedicated controller for the media playback system 100. In another example, the control device 300 may be a network device on which media playback system controller application software may be installed, such as for example, an iPhone^{™}, iPad^{™} or any other smart phone, tablet or network device *(e.g.,* a networked computer such as a PC or Mac^{™}).

The processor 302 may be configured to perform functions relevant to facilitating user access, control, and configuration of the media playback system 100. The memory 304 may be configured to store instructions executable by the processor 302 to perform those functions. The memory 304 may also be configured to store the media playback system controller application software and other data associated with the media playback system 100 and the user.

In one example, the network interface 306 may be based on an industry standard (*e.g.,* infrared, radio, wired standards including IEEE 802.3, wireless standards including IEEE 802.11a, 802.11b, 802.1 1g, 802.11n, 802.1 1ac, 802.15, 4G mobile communication standard, and so on). The network interface 306 may provide a means for the control device 300 to communicate with other devices in the media playback system 100. In one example, data and information (*e.g.,* such as a state variable) may be communicated between control device 300 and other devices via the network interface 306. For instance, playback zone and zone group configurations in the media playback system 100 may be received by the control device 300 from a playback device or another network device, or transmitted by the control device 300 to another playback device or network device via the network interface 306. In some cases, the other network device may be another control device.

Playback device control commands such as volume control and audio playback control may also be communicated from the control device 300 to a playback device via the network interface 306. As suggested above, changes to configurations of the media playback system 100 may also be performed by a user using the control device 300. The configuration changes may include adding/removing one or more playback devices to/from a zone, adding/removing one or more zones to/from a zone group, forming a bonded or consolidated player, separating one or more playback devices from a bonded or consolidated player, among others. Accordingly, the control device 300 may sometimes be referred to as a controller, whether the control device 300 is a dedicated controller or a network device on which media playback system controller application software is installed.

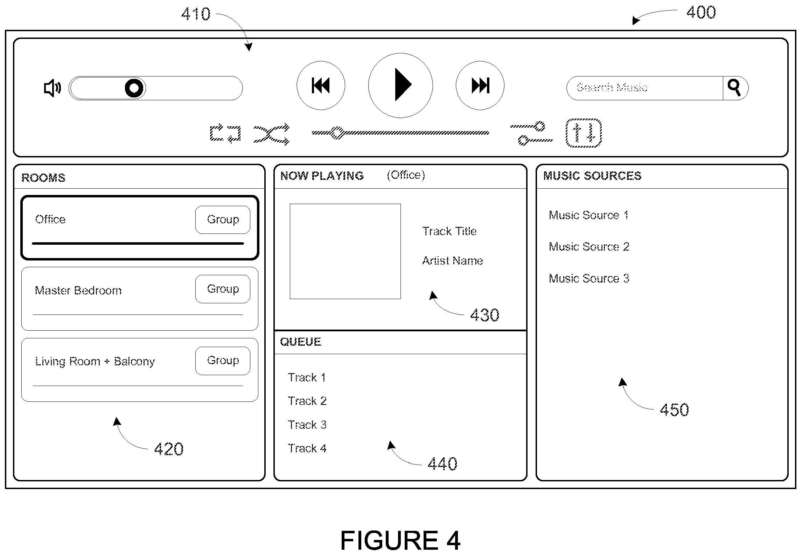

The user interface 308 of the control device 300 may be configured to facilitate user access and control of the media playback system 100, by providing a controller interface such as the controller interface 400 shown in Figure 4. The controller interface 400 includes a playback control region 410, a playback zone region 420, a playback status region 430, a playback queue region 440, and an audio content sources region 450. The user interface 400 as shown is just one example of a user interface that may be provided on a network device such as the control device 300 of Figure 3 (and/or the control devices 126 and 128 of Figure 1) and accessed by users to control a media playback system such as the media playback system 100. Other user interfaces of varying formats, styles, and interactive sequences may alternatively be implemented on one or more network devices to provide comparable control access to a media playback system.

The playback control region 410 may include selectable (e.g., by way of touch or by using a cursor) icons to cause playback devices in a selected playback zone or zone group to play or pause, fast forward, rewind, skip to next, skip to previous, enter/exit shuffle mode, enter/exit repeat mode, enter/exit cross fade mode. The playback control region 410 may also include selectable icons to modify equalization settings, and playback volume, among other possibilities.

The playback zone region 420 may include representations of playback zones within the media playback system 100. In some embodiments, the graphical representations of playback zones may be selectable to bring up additional selectable icons to manage or configure the playback zones in the media playback system, such as a creation of bonded zones, creation of zone groups, separation of zone groups, and renaming of zone groups, among other possibilities.

For example, as shown, a "group" icon may be provided within each of the graphical representations of playback zones. The "group" icon provided within a graphical representation of a particular zone may be selectable to bring up options to select one or more other zones in the media playback system to be grouped with the particular zone. Once grouped, playback devices in the zones that have been grouped with the particular zone will be configured to play audio content in synchrony with the playback device(s) in the particular zone. Analogously, a "group" icon may be provided within a graphical representation of a zone group. In this case, the "group" icon may be selectable to bring up options to deselect one or more zones in the zone group to be removed from the zone group. Other interactions and implementations for grouping and ungrouping zones via a user interface such as the user interface 400 are also possible. The representations of playback zones in the playback zone region 420 may be dynamically updated as playback zone or zone group configurations are modified.

The playback status region 430 may include graphical representations of audio content that is presently being played, previously played, or scheduled to play next in the selected playback zone or zone group. The selected playback zone or zone group may be visually distinguished on the user interface, such as within the playback zone region 420 and/or the playback status region 430. The graphical representations may include track title, artist name, album name, album year, track length, and other relevant information that may be useful for the user to know when controlling the media playback system via the user interface 400.

The playback queue region 440 may include graphical representations of audio content in a playback queue associated with the selected playback zone or zone group. In some embodiments, each playback zone or zone group may be associated with a playback queue containing information corresponding to zero or more audio items for playback by the playback zone or zone group. For instance, each audio item in the playback queue may comprise a uniform resource identifier (URI), a uniform resource locator (URL) or some other identifier that may be used by a playback device in the playback zone or zone group to find and/or retrieve the audio item from a local audio content source or a networked audio content source, possibly for playback by the playback device.

In one example, a playlist may be added to a playback queue, in which case information corresponding to each audio item in the playlist may be added to the playback queue. In another example, audio items in a playback queue may be saved as a playlist. In a further example, a playback queue may be empty, or populated but "not in use" when the playback zone or zone group is playing continuously streaming audio content, such as Internet radio that may continue to play until otherwise stopped, rather than discrete audio items that have playback durations. In an alternative embodiment, a playback queue can include Internet radio and/or other streaming audio content items and be "in use" when the playback zone or zone group is playing those items. Other examples are also possible.

When playback zones or zone groups are "grouped" or "ungrouped," playback queues associated with the affected playback zones or zone groups may be cleared or re-associated. For example, if a first playback zone including a first playback queue is grouped with a second playback zone including a second playback queue, the established zone group may have an associated playback queue that is initially empty, that contains audio items from the first playback queue (such as if the second playback zone was added to the first playback zone), that contains audio items from the second playback queue (such as if the first playback zone was added to the second playback zone), or a combination of audio items from both the first and second playback queues. Subsequently, if the established zone group is ungrouped, the resulting first playback zone may be re-associated with the previous first playback queue, or be associated with a new playback queue that is empty or contains audio items from the playback queue associated with the established zone group before the established zone group was ungrouped. Similarly, the resulting second playback zone may be re-associated with the previous second playback queue, or be associated with a new playback queue that is empty, or contains audio items from the playback queue associated with the established zone group before the established zone group was ungrouped. Other examples are also possible.

Referring back to the user interface 400 of Figure 4, the graphical representations of audio content in the playback queue region 440 may include track titles, artist names, track lengths, and other relevant information associated with the audio content in the playback queue. In one example, graphical representations of audio content may be selectable to bring up additional selectable icons to manage and/or manipulate the playback queue and/or audio content represented in the playback queue. For instance, a represented audio content may be removed from the playback queue, moved to a different position within the playback queue, or selected to be played immediately, or after any currently playing audio content, among other possibilities. A playback queue associated with a playback zone or zone group may be stored in a memory on one or more playback devices in the playback zone or zone group, on a playback device that is not in the playback zone or zone group, and/or some other designated device.

The audio content sources region 450 may include graphical representations of selectable audio content sources from which audio content may be retrieved and played by the selected playback zone or zone group. Discussions pertaining to audio content sources may be found in the following section.

### d. Example Audio Content Sources

As indicated previously, one or more playback devices in a zone or zone group may be configured to retrieve for playback audio content (e.g. according to a corresponding URI or URL for the audio content) from a variety of available audio content sources. In one example, audio content may be retrieved by a playback device directly from a corresponding audio content source (e.g., a line-in connection). In another example, audio content may be provided to a playback device over a network via one or more other playback devices or network devices.

Example audio content sources may include a memory of one or more playback devices in a media playback system such as the media playback system 100 of Figure 1, local music libraries on one or more network devices (such as a control device, a network-enabled personal computer, or a networked-attached storage (NAS), for example), streaming audio services providing audio content via the Internet *(e.g.,* the cloud), or audio sources connected to the media playback system via a line-in input connection on a playback device or network devise, among other possibilities.

In some embodiments, audio content sources may be regularly added or removed from a media playback system such as the media playback system 100 of Figure 1. In one example, an indexing of audio items may be performed whenever one or more audio content sources are added, removed or updated. Indexing of audio items may involve scanning for identifiable audio items in all folders/directory shared over a network accessible by playback devices in the media playback system, and generating or updating an audio content database containing metadata (e.g., title, artist, album, track length, among others) and other associated information, such as a URI or URL for each identifiable audio item found. Other examples for managing and maintaining audio content sources may also be possible.

The above discussions relating to playback devices, controller devices, playback zone configurations, and media content sources provide only some examples of operating environments within which functions and methods described below may be implemented. Other operating environments and configurations of media playback systems, playback devices, and network devices not explicitly described herein may also be applicable and suitable for implementation of the functions and methods.

### III. Example Methods for Managing Playback of Media Content

As discussed above, embodiments described herein may involve managing playback of media by a media playback system based on identified preference data associated with user accounts interfacing with the media playback system. Figure 500 shows an example media playback system environment 500 within which the embodiments may be implemented. As shown, the media playback system environment 500 includes an example service provider 502, an example media system server 504, an example media playback system 506, an example first user account 508, and an example second user account 510. The first user account 508 and the second user account 510 may be two of a plurality of user accounts for accessing the media playback system 506 and/or the service provider 502. In some cases, the example media playback system may be accessed using just a single, perhaps indiscernible, account. One or more controller devices, such as the control device 300 of Figure 3, may communicate with the media playback system 506 and/or the service provider 502 (and other service providers) using the first user account 508 and/or the second user account 510. Each of the service provider 502, media system server 504, media playback system 506, and any controller device(s) associated with the first user account 508 or the second user account 510 may communicate with each other either directly, or indirectly via another device, over a local area network (LAN), wide area network (WAN) or some combination thereof.

The media playback system 506 may be a playback system such as that described above in connection to Figure 1, and may include one or more playback devices configured to play media content in synchrony within one or more playback zones. As indicated above, the first user account 508 and the second user account 510 may be used to utilize the media playback system 506.

The media system server 504 may be a server associated with the media playback system 506 and/or a provider of the media playback system 506. The media system server 504 may store information relating to the media playback system 506. Such information may include playback device information, playback zone information, service provider association information, and/or user account/profile information, among other information.

The service provider 502 may provide media content for playback by the media playback system 506. The media playback system 506 accesses the service provider 502 using a user account. As such, the one or more user profiles used to access the media playback system 506 may use the user account to access the service provider 502.

In one example, the service provider 502 may be a media streaming service that provides individual media items and/or collections of media items (i.e. albums, playlists, radio channels, etc.). In one example, the service provider 502 may provide a curated playlist based on media preferences and/or inputs of a user account for the service provider 502.

The content provided by the service provider 502 may include individual media items or collections of media items (i.e. albums, playlists, radio channels, etc.). The service provider 502 provides media content in response to requests for certain types of media content (i.e. a catered playlist, radio channels, etc). The service provider 502 may also provide catered playlists of media content based on user preferences and input. For instance, if a service provider user account for the service provider 502 indicates that the user enjoys a particular genre of music, the service provider 502 may provide music within the particular genre, or music within similar, or related genres. In another case, the service provider 502 may provide a series of music selected based on media preferences associated with the user account. Other examples of services available through service provider 502 are also possible.

In an example, the service provider 502 provides a media item to a user account (such as the first user account 508 or the second user account 510) used to access the service provider 502 (and/or a user profile associated with the media playback system 506), but the user account/user profile actually has a negative media preference associated with the media item. For instance, the user account and/or user profile is associated with a negative media preference for a particular artist within the genre of music.

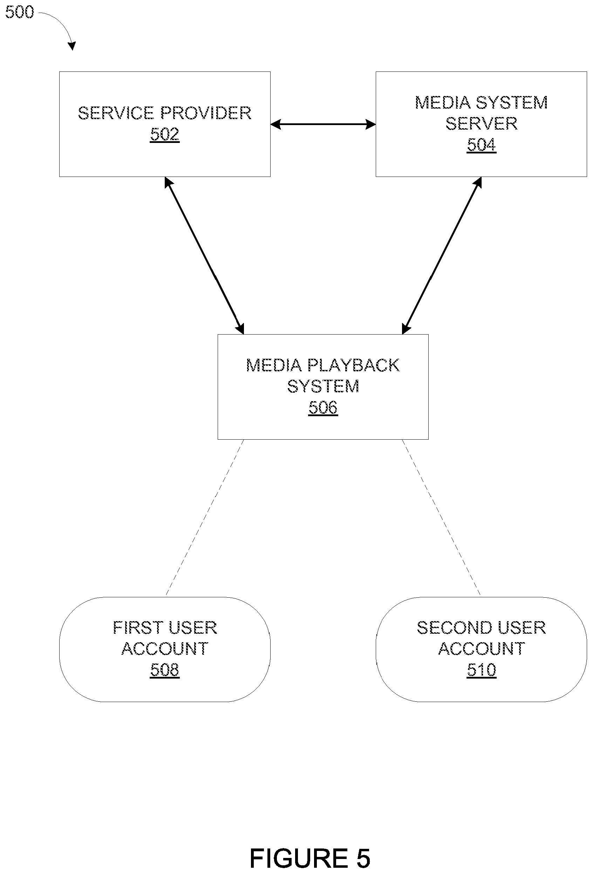

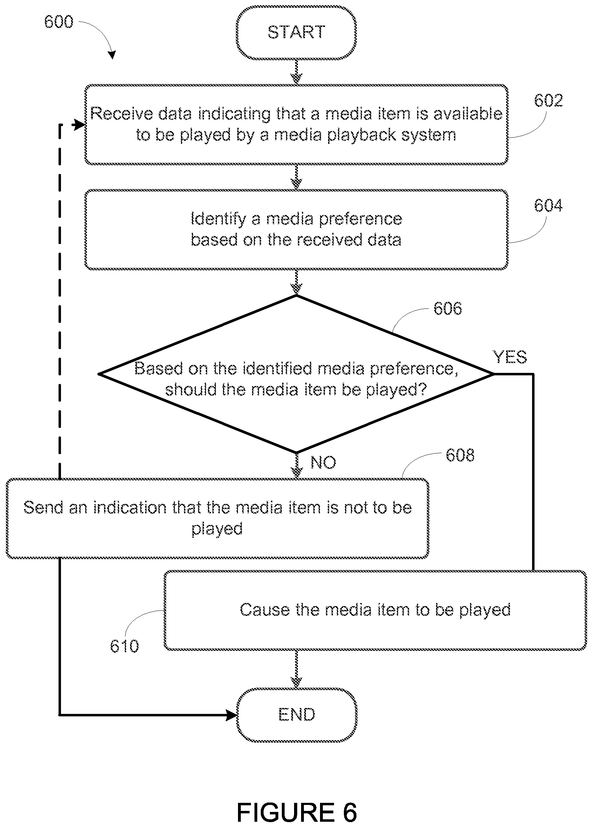

Embodiments described in the following are implemented for managing playback of media content based on media preferences such that media items are not played if a negative media preference is associated between the media item and a user account and/or user profile. Figure 6 shows an example flow diagram of an example method 600 for such an embodiment. Methods presented herein may be implemented within operating environments involving, for example, the media playback system 100 of Figure 1, one or more of the playback device 200 of Figure 2, one or more of the control device 300 of Figure 3, and the media playback system environment 500 of Figure 5. In other words, the methods may be performed by any one or more of the devices, systems, and servers described above.

In one example, functions of methods disclosed herein may be performed by the media system server 504. In another example, the functions may alternatively be performed by one or more devices associated with the media playback system 506, such as one or more playback devices in the media playback system 506 and/or one or more controller devices used to access the media playback system 506. In a further example, the functions may be performed in part by the media system server 504 and in part by one or more devices in the media playback system 506. Other examples are also possible.

In addition, for the methods disclosed herein, the flowchart shows functionality and operation of one possible implementation of present embodiments. In this regard, each block may represent a module, a segment, or a portion of program code, which includes one or more instructions executable by a processor for implementing specific logical functions or steps in the process. The program code may be stored on any type of computer readable medium, for example, such as a storage device including a disk or hard drive. The computer readable medium may include non-transitory computer readable medium, for example, such as computer-readable media that stores data for short periods of time like register memory, processor cache and Random Access Memory (RAM). The computer readable medium may also include non-transitory media, such as secondary or persistent long term storage, like read only memory (ROM), optical or magnetic disks, compact-disc read only memory (CD-ROM), for example. The computer readable media may also be any other volatile or nonvolatile storage systems. The computer readable medium may be considered a computer readable storage medium, for example, or a tangible storage device. In addition, for the methods disclosed herein, each block may represent circuitry that is wired to perform the specific logical functions in the process. Although the blocks are illustrated in sequential order, these blocks may also be performed in parallel, and/or in a different order than those described herein. Also, the various blocks may be combined into fewer blocks, divided into additional blocks, and/or removed based upon the desired implementation.

At block 602, the method 600 involves receiving data indicating that a media item is available to be played by a playback device. Continuing with the examples above, the playback device may be a playback device in the media playback system 506. In one example, the data may be received from the service provider 502. In another example, the data may be received from a controller device, or another device associated with the media playback system 506. The data may include metadata identifying the media item. The metadata may indicate one or more of a track title, artist name, album name, genre, or contextual information such as a time of day, season, or activity the media item may be associated with or suitable for, among others.

The media item may be a media item identified by the service provider 502 based on a request for media content to be played by the playback device. In one example, the data may be provided by the service provider 502 when a transmission of media data for the media item to the playback device. In one example, the data may be provided to the media system server 504 from the service provider 502. For instance, the service provider 502 may provide the data to the media system server 504 while providing the media data to the playback device of the media playback system 506. In another example, the data may be provided to the media playback system 506. In a further example, the data may be provided to the media system server 504 from the service provider 502 via the media playback system.

At block 604, the method 600 involves identifying a media preference based on the received data. The media preference is identified in a preference database. In one case, the preference database may be affiliated with the media playback system 506, and may contain various media preferences associated with user profiles and media items associated with the media playback system 506. In one instance, media preferences in the preference database may have been provided as feedback to media items provided by the service provider 502 and/or any other service providers that provide media content to the media playback system 506. In another instance, media preferences in the preference database may have been provided as part of setting up and customizing one or more user profiles. Other examples of providing media preferences may exist.

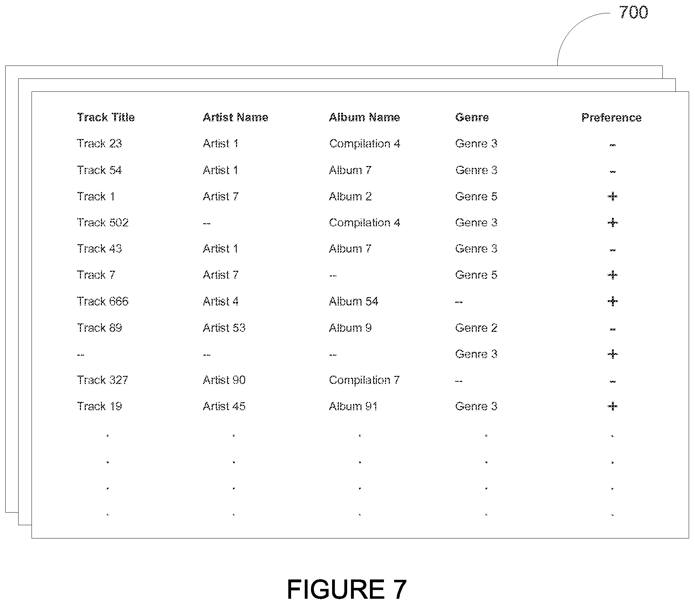

Figure 7 shows an example preference database 700 that is affiliated with the media playback system 506. In one example, the preference database 700 may be stored on one or more remote servers, such as the media system server 504. In another example, the preference database may be stored on one or more local devices in communication with the media playback system 506. In a further example, parts of the preference database may be stored on the one or more remote servers and the one or more local devices. Other examples are also possible.

As shown, the preference database 700 includes columns for information identifying a media item, including a track title column, an artist name column, an album name column, and a genre column. For each media item entry, a media preference associated with the media item is shown in a media preference column. In this example, a "+" in the media preference column may indicate a positive media preference for the respective entry, and a "-" in the media preference column may indicate a negative media preference for the respective entry. In some cases, the media preferences may alternatively be on a gradient scale, rather than a binary scale. For instance, a media preference may range from one to five, with "one" indicating a relatively negative preference and "five" indicating a relatively positive preference. Other examples are also possible.

In one example, additional columns may be included. For instance, a service-provider identification column for the media item may be included. If the media item was being accessed through the service provider 502 when the user provided the media preference for the media item, a service-provider identification of the media item used by the service provider 502 to identify the media item may be recorded in the service-provider identification column for the respective entry.

Referring back to block 604, identifying a media preference based on the received data may, in one example, involve sending to an external preference source (such as another service provider, for example), a request for preference data based on the received data, and receiving the preference data in response to the request. As mentioned previously, identifying a media preference based on the received data involves searching in the preference database (whether the database is stored locally or remotely) for database entries associated with the media item. The search may be based on metadata associated with the media item.

In one instance, the identified media preference may be directly associated with the media item. For instance, referring to Figure 7, if the metadata indicates a track title of "Track 23" and an artist name of "Artist 1," a media preference for a database entry having a matching track title and artist name may be identified in the preference database. As shown in the preference database 700, a negative media preference may accordingly be identified as being associated with the media item having the track title of Track 23 and the artist name of Artist 1.

In some cases, the search for database entries in the preference database may be implemented such that exact matches are required. For instance, if the metadata indicates a different album name than "Compilation 4," as shown in Figure 7, then the media preference associated with Track 23 and Artist 1 may not be identified as relevant to the media item.

In some other cases, the search for database entries in the preference database 700 may be implemented according to an approximate string matching (or "fuzzy matching"). In such a case, if the metadata indicates a different album name than "Compilation 4" for Track 23 and Artist 1, the media preference associated with the entry in the preference database 700 having a track title of Track 23 and an artist name of Artist 1 may still be recognized as being applicable to the media item.

In another example, the identified media preference may be indirectly associated with the media item, but rather associated with media content similar to the media item. For instance, the received metadata may indicate a genre of the media item. In this case, if media preferences associated with entries in the preference database having the indicated genre are positive or negative, a media preference that is positive or negative, respectively, may be identified for the media item. In one case, as shown in Figure 7, a positive media preference may be associated with an entry having only a genre of "Genre 3." As such, a positive media preference may be identified for the media item if the metadata received for the media item indicates a genre of Genre 3.

In yet another example, the media playback system 506 may recognize particular nuances in the media preferences stored in the preference database 700. For instance, a positive media preference may be associated with all entries in the preference database 700 having genre of Genre3, except for entries having an artist name of Artist 1. As such, a positive media preference may be identified if the metadata for the media item indicates a genre of Genre 3, but a negative media preference may be identified if the metadata for the media item also indicates an artist name of Artist 1. Other implementations of database searching, including some combination of the examples discussed above are also possible.

In some cases, as discussed above, one or more user profiles may be used to access the media playback system 506, and the preference database 700 may include an additional column indicating a user profile associated with a respective entry. In such a case, identifying the media preference associated with the media item may further involve identifying a user profile that is accessing the media playback system 506 when the data indicating that the media item is available to be played is received at block 502. As such, identification of the media preference may also be based on the user profile that is accessing the media playback system 506. Accordingly, media preferences associated with the user profile may be applicable only when the user profile is accessing the media playback system 506.

As indicated above, the preference database 700 is affiliated with the media playback system 506, and contains media preferences associated with user profiles of the media playback system 506 and media content played by the media playback system 506. Accordingly, in some examples, the service provider providing the media item to be played, and the service providers that previously provided media items for which media preferences were provided, may not be relevant when identifying a preference for a media item. For instance, if the data received at block 602 is from the service provider 502, the entry in the preference database 700 matching the media item based on the received data may be, in one case, associated with the service provider 502 because the service provider 502 provided the media item when the entry was added to the preference database, or in another case, associated with another service provider. Whichever the case, the same media preference may be identified for the media item based on the entry in the preference database 700, independent of the service provider associated with the entry in the preference database 700.

At block 606, the method involves determining, based on the identified media preference, whether the media item should be played. In some cases, the identified media preference may be one of either a positive media preference or a negative media preference. In such cases, if the identified media preference is a positive media preference, a determination may be made that the media item should be played. On the other hand, if the identified media preference is a negative media preference, a determination may be made that the media item should not be played.

In some other cases, the identified media preference may not be only one of either a negative media preference or a positive media preference. For instance, the identified media preference may include multiple media preferences, including both positive and negative media preferences. In such a case, a determination may be made based on the different media preferences. In one example, different associations between the media item and media preferences in the preferences database may be weighted differently, and a determination of whether the media item should be played may be based on an average or sum of the weighted media preferences. In such a case, a media preference threshold may be implemented such that a determination is made that the media item should be played only if the average or sum of the weighted media preferences exceeds the threshold. Other examples are also possible.

In some further cases, determining whether the media item should be played may further involve determining when the media item was most recently played, and/or how frequently the media item is played. Continuing with the weighted media preferences and media preference threshold example above, if the media item has been recently played, the media preference threshold for determining that the media item should be played may be more restrictive. In another words, a dynamic threshold may be implemented such that if a strong positive media preference is identified for the media item, a determination may be made that the media item should be played even if the media item has been recently played or is frequently played. On the other hand, if a mild positive media preference is identified, a determination may be made that the media item should be played only if the media item was not recently played. Other examples are also possible.

As shown in Figure 6, if a determination is made that the media item should be played, the method 600 may proceed to block 610, involving causing the media item to be played. In one example, causing the media item to be played may involve allowing and/or directing the media playback system 506 to proceed to play the media item provided by the service provider 502 without any further action. In another example, causing the media item to be played may involve sending to the media playback system 506 an indication that the media item is to be played. In one example, the media item may be provided to the playback device from the service provider 502 via another device in the media playback system 506 or the media system server 504. In such a case, a transmission or forwarding of the media item by the other device in the media playback system 506 to the playback device may indicate that the media item is to be played.

Alternatively, if a determination is made that the media item should not be played, the method 600 proceeds to block 608, which involves sending an indication that the media item is not to be played. In one example, the indication may inform the media playback system 506 that the media item will not be provided because a determination is made that the media item should not be played. In response to receiving the indication that the media item is not to be played, the media playback system 506 will not play the media item.

In one example, the indication may be sent directly to the service provider 502. In another example, the media system server 504 may send the indication to the media playback system 506, which may, upon receiving the indication, send the indication to the service provider 502. In one case, the media playback system 506 or media system server 504 may also send a request for different media content. In this case, when the different media content is provided by the service provider 502 and is available to be played by the playback device, the method 600 may loop back to block 602 to determine whether the different media content is to be played.

In one example, the indication may include media preference data indicating a negative media preference associated between the media item that is not to be played, and the user account used to access the server provider 502 may also be sent to the service provider 502. In this case, the service provider 502 may record the negative media preference for the media item in association with the user account. Other examples are also possible.

In some embodiments, an indication may also be sent to one or more controller devices in communication with the media playback system 506. The respective user interfaces of the one or more controller devices may accordingly display an indication that a media item was not played based on an identified media preference. In some cases, a list of media items that were provided, or attempted to be provided, but not played due to identified media preferences may be compiled provided on the respective user interfaces. Other examples are also possible.

One having ordinary skill in the art will appreciate that the examples discussed above may be applied in various media playback scenarios. For instance, the embodiments described herein may generally apply to a scenario in which the service provider 502 provides a media item to the media playback system that was not specifically requested. On the other hand, however, if the media item was explicitly and specifically selected for playback, the media item may be played whether any media preference, positive or negative is associated with corresponding media item(s) in the preference database 700. In such a case, the process of identifying a media preference in the preference database 700 may be bypassed. Alternatively, an indication that the media item was explicitly and specifically selected may override media preferences in the preference database. Other examples are also possible.

In addition to the scenarios described above, embodiments herein may also be implemented and/or applied in other media playback scenarios to achieve similar or difference purposes as well, such as a parental control of media content. Other examples are also possible.

### IV. Additional Example Methods for Managing Playback of Media Content

Referring again to Figure 5, in one example, the first user account 508 may be used to request media content from the service provider 502, and the service provider 502 may provide media content for playback by the media playback system 506 based on media preferences associated with the first user account 508, and/or according to requests from the first user account 508. In some cases, however, the service provider 502 may provide media content that has a negative preference associated with the second user account 510 while users associated with the second user account 510 are present where the music is, or will be playing. Embodiments described herein may be implemented for managing playback of media content based at least partially on media preference associated with the second user account 510, even when the media content is provided in response to a request via the first user account 508.

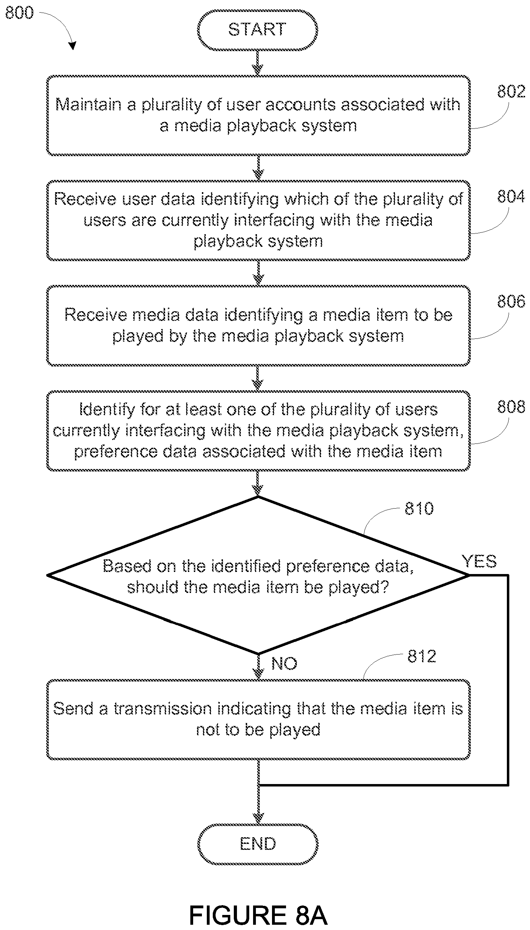

Figure 8A shows an example flow diagram of an example method 800 for such an embodiment. At block 802, the method 800 involves maintaining a plurality of user accounts associated with a media playback system. In one example, the media system server 504 may store a database containing user account information for the plurality of user accounts associated with the media playback system 506. Each of the user accounts may be used to access the media playback system 506. For instance, a user may log on to the media playback system 506 using one of the plurality of user accounts. As suggested above, the plurality of user accounts associated with the media playback system may include the first user account 508 and the second user account 510.

At block 804, the method 800 involves receiving user data identifying which of the plurality of user accounts are currently interfacing with the media playback system. In one example, a user account may be considered to be interfacing with the media playback system if the user account is logged on the media playback system 506, actively interacting with the media playback system, and/or tied to a controller device in communication with the media playback system. In one case, media playback system 506 may provide the media system server 504 with user data identifying currently interfacing user accounts. The media playback system 506 may provide this information periodically, whenever a user account becomes active/not active, or whenever it is about to play a media item. In another example, the media system server 504 may periodically send to the media playback system 506, a request for a current/updated user data. In response, the media playback system 506 may identify which user accounts are currently interfacing with the media playback system 506, and send to the media system server 504, the user data identifying the currently interfacing user accounts.

In another case, the media system server 504 may send the request for the current/updated user data when such information is needed. For instance, the media system server 504 may send the request when determining whether media content is to be played by the media playback system 506 based at least partially on actively interfacing user accounts. As such, in some embodiments, block 804 may be implemented after block 806, which is discussed below.

At block 806, the method 800 involves receiving media data identifying a media item to be played by the media playback system. In one example, the service provider 502 may provide the media item to the media playback system 506 for playback. Then, based on the received media item, the media playback system 506 may send the media data identifying the media item to the media system server 504. In another example, the server provider 502 may send the media data directly to the media system server 504 prior to, or concurrently with providing the media item to the media playback system 506 for playback. Other examples are also possible.

In one example, the media item may be provided by the service provider 502 in response to an input received via the first user account. In such a case, the media item may have been selected by the service provider 502 based on media preferences associated with the first user account 508.

The media data may include metadata identifying the media item. For instance, the metadata may indicate one or more of a track title, artist name, album name, genre, or contextual information such as a time of day, season, or activity the media item may be associated with or suitable for, among others. In some cases, the metadata may further indicate a service-provider identifier used by the service provider 502 to identify the media item.

At block 808, the method 800 involves identifying, for at least one of the plurality of user accounts that are currently interfacing with the media playback system, preference data associated with the media item. Continuing with the examples above, if the user data indicates that the first user account 508 and the second user account 510 are currently interfacing the media playback system 506, preference data associated between the media item and the first user account 508, and preference data associated between the media item and the second user account 510 may both be identified. Preference data associated between the media item and any other user accounts currently interfacing the media playback system 506 may also be identified.

For illustration purposes, the following discussion of preference data identification at block 808 may generally involve identifying preference data associated between the media item and the second user account 510. One having ordinary skill in the art will appreciate that the relevant descriptions and examples may also be applied to any other user accounts identified in the user data as currently interfacing the media playback system 506.

In one example, if the second user account 510 is associated with one or more service providers including the service provider 502, the preference data may be identified by querying one or more of the service providers for any media preferences associated with the media item and user accounts that are currently interfacing the media playback system 506. In another example, the preference data may be identified in a preference database that is affiliated with the media playback system 506. The preference database may contain preference data associated between media items and user accounts associated with the media playback system 506. As such, the preference database may include preference data indicating preferences associated with at least the first user account 508 and the second user account 510.

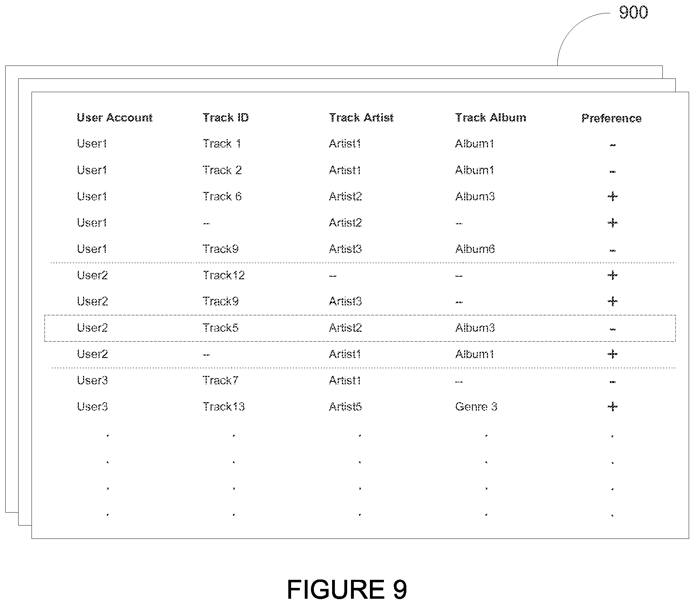

Figure 9 shows aspects of an example preference database 900 that comprises features of the database 700 of Figure 7. As shown, the preference database 700 includes columns for data identifying a media item, including a track ID column, a track artist column, and a track album column. For each media item entry, preference data associated with the media item entry is shown in a preference column. Further, a user account associated with a media item entry may be provided in a user account column. In this illustrative example, a user account of "User1" may indicate that the respective media item entries and preference data are associated with the first user account 508, and a user account of "User2" may indicate that the respective media item entries and preference data are associated with the second user account 510.

Referring back to block 808, identifying preference data associated with the media item may involve searching the preference database for a media item entry that is associated with the user accounts currently interfacing the media playback system 506, and that is related to the media item. Preference data corresponding to the media item entry may then be identified as being associated with the media item.

The searching may be based on the metadata identifying the media item. In one example, referring to Figure 9, if the metadata identifying the media item indicates a track ID of "Track5" and a track artist name of "Artist2," preference data for a media item entry having a user account of User2 (for the second user account 510) and matching track title and artist name, may be identified in the preference database. As shown in the preference database 900, preference data indicating a negative preference may be identified as being associated with the second user account 510 and the media item entry having the track ID of Track5 and the track artist of Artist2.

In some cases, the search for database entries in the preference database may be implemented such that exact matches are required. For instance, if the received metadata indicates a different album name than "Album3" as shown in Figure 9, then the preference associated with Track5 and Artist2 may not be identified as relevant to the media item.

In some other cases, the search for database entries in the preference database 900 may be implemented according to an approximate string matching (or "fuzzy matching"). In such a case, if the received metadata indicates a different album name than Album3 for Track5 and Artist2, the preference data associated with the media item entry in the preference database 900 having a track title of Track5 and an artist name of Artist2 may still be recognized as being applicable to the media item.

In some other cases, the identified preference data may be associated with media content similar to the media item, and thus indirectly associated with the particular media item. For instance, the metadata for the media item may indicate a track artist of the media item. In this case, preference data corresponding to media item entries having the track artist may be identified for the media item. Other implementations of database searching, including combinations of the examples discussed above are also possible.

In one example, the second user account 510 may further, or alternatively, be a user account used to access another media playback system. In such a case, a different preference database affiliated with the other media playback system may also contain preference data associated with the second user account 510. Accordingly, identifying the preference associated with the second user account 510 may involve searching in the different preference database for media item entries associated with the media item and the second user account 510. In one example, the other media playback system may be similar to the media playback system 506. In some cases, the different preference database may be of a similar format as the preference database 900. In one case, the different preference database may be stored on the media system server 540 along with the preference database 900. Other examples are also possible.

Referring back to the method 800, block 810 involves determining, based on the identified preference data, whether the media item should be played. In one case, the identified preference data may indicate a simple positive preference or negative preference. In another case, the identified preference data may indicate multiple preferences that are generally positive or negative. In either case, if the identified preference data indicates a clearly positive preference, a determination may be made that the media item should be played. On the other hand, if the identified preference data indicates a clearly negative preference, a determination may be made that the media item should not be played.

In some other cases, the identified preference data may indicate multiple preferences, including both positive and negative preferences. For instance, the preference data may indicate preferences from multiple user accounts that are currently interfacing the media playback system 506. In such cases, a determination may be made based on the different preferences. In one example, the different preferences may be weighted differently based on their respective associations between the media item (i.e. how close of a match between the corresponding media item entry and the media item), and a determination of whether the media item should be played may be based on an average or sum of the weighted preferences. In such a case, a preference threshold may be implemented such that a determination is made that the media item should be played only if the average or sum of the weighted preferences exceeds the threshold. Other examples are also possible.

As shown in Figure 8A, if at block 810, a determination is made that the media item should be played, the media playback system 506 may in one example, proceed to play the media item. Alternatively, in some embodiments, a transmission indicating that the media item is to be played may be sent to one or more playback devices in the media playback system 506. In some cases, if the media item is provided to the one or more playback devices from the service provider 502 via the media system server 504, or another device in the media playback system 506, a transmission or forwarding of the media item to the one or more playback devices in the media playback system 506 may indicate that the media item is to be played.

Alternatively, if a determination is made that the media item should not to be played, the method 800 may proceed to block 812, which involves sending a transmission indicating that the media item is not to be played. In one example, the transmission may inform the one or more playback devices in the media playback system 506 that the media item will not be provided because a determination is made that the media item should not be played.

In one example, the media system server 504 may directly send the transmission to the service provider 502. In another example, the media playback system 506, upon receiving the transmission, may send the transmission to the service provider 502. In one case, the media playback system 506 may also send a request for different media content. In another example, the media playback system 506 may also send to the service provider 502, preference data indicating a negative preference associated between the media item that is not to be played and the second user account 510. In this case, if the second user account 510 is an account used to access the service provider 502, the service provider 502 may record the negative preference for the media item in association with the second user account 510. Other examples are also possible.

In some embodiments, a transmission may also be sent to one or more controller devices in communication with the media playback system 506. The respective user interfaces of the one or more controller devices may accordingly display an indication that a media item was not played based on an identified preference. In some cases, the indication may identify the media item that was not played.

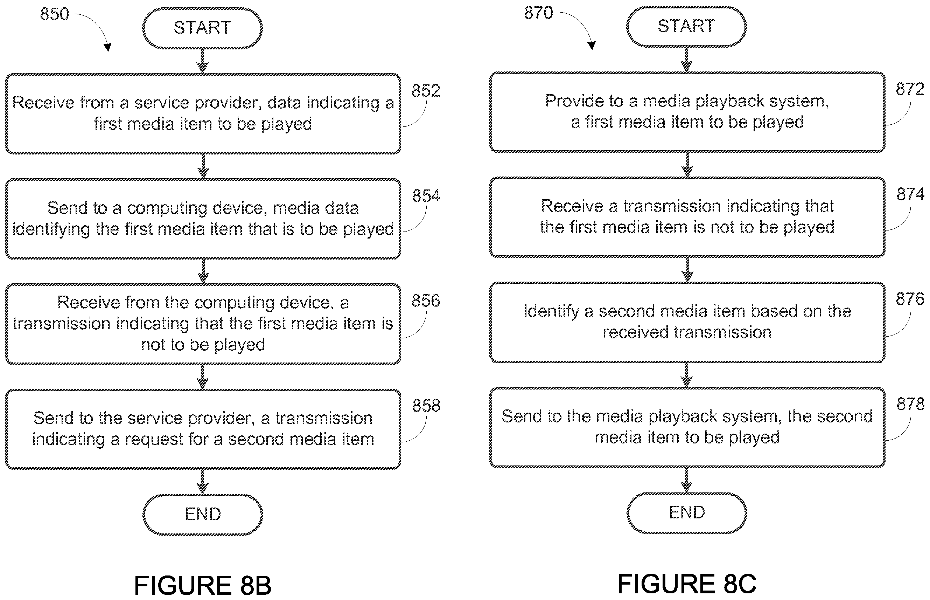

In the examples discussed above, the media system server 504 may communicate directly with both the media playback system 506 and the service provider 502. In some cases, however, the service provider 502 may be configured to communicate directly with the media playback system 506, and not configured to communicate directly with the media system 504. As such, the media system server 504 may communicate with the service provider 502 via the media playback system 506. Figure 8B shows an example flow diagram of a method 850 for an embodiment in which the media playback system 506 provides communication between the media system server 504 and the service provider 502.

At block 852, the method 850 involves receiving from a service provider, data indicating a first media item to be played. In one example, a device, such as a playback device in the media playback system 506 may generally be configured to receive, from the service provider 502, media content to be played by the playback device and/or other playback devices in the media playback system 506. The first media item may be the media item received from the service provider 502 in response to an input from a user of the media playback system 506, as discussed previously in connection to Figure 8A.

At block 854, the method 850 involves sending to a computing device, media data identifying the first media item that is to be played. Continuing with the examples above, the computing device may be the media system server 504. In one example, the service provider 502, when providing the first media item to the playback device for playback, may also provide metadata associated with the first media item. In some cases, some or all of the metadata may be displayed on a controller interface for the media playback system 506 if and when the first media item is played by the playback device. In one case, the playback device may send to the media system server 504, media data containing the some or all of the metadata identifying the first media item.

At block 856, the method 850 involves receiving from the computing device, a transmission indicating that the first media item is not to be played. In one example, the media system server 504 may determine whether the first media item is to be played, and send a transmission to the media playback system 506, as discussed above with respect to method 800 shown in Figure 8A. At block 856 of method 850, the media playback system 506 may receive the transmission indicating that the media item is not to be played, and accordingly, does not play the media item. In one example, the media playback system 506 may be configured to proceed with playing the first media item if no transmission indicating the contrary is received within a predetermine period of time.

At block 858, the method 850 involves sending to the service provider, a transmission indicating a request for a second media item. Continuing with the examples above, the media playback system 506 may send a transmission to the service provider 502 requesting a different, second media item to be played. In one example, the transmission may indicate one or more user accounts and/or preference data indicating why the first media item is not to be played and why the second media item is requested.

Figure 8C shows an example flow diagram of a method 870 for an embodiment in which the service provider 502 provides the different media item based on the received transmission. At block 872, the method 870 involves providing to a media playback system, a first media item to be played. Continuing with the above example, the first media item may be the media item provided to the media playback system 506 as identified by the media data of block 806, in connection to Figure 8A.

At block 874, the method 870 involves receiving a transmission indicating the first media item is not to be played. The transmission may be the transmission indicating a request for a different media item as provided by the media playback system 506 at block 858 of Figure 8B, or the transmission provided by the media system server 504 at block 812 of Figure 8A. In addition, the transmission may include the identification of an additional user account(s) that is interfacing with the media playback system 506.

At block 876, the method 870 involves identifying a second media item based on the received transmission. In one case, the service provider 502 may identify the second media item based on the input and/or media preferences (associated with the first user account 508, for example) that caused the service provider 502 to identify the first media item that was previously provided to the media playback system 506. In another case, if the received transmission identifies an additional user account that is interfacing with the media playback system 506, the service provider 502 may identify the second media item based at least partially on the profile of the additional user account in addition to the profile of the first user account (similar to the method 880 discussed below).

Block 878 of method 870 involves sending to the media playback system, the second media item to be played. The service provider 502 may send the second media item to the media playback system 506 for playback. In some cases, the service provider 502, if in communication with the media system server 504, may send to the media system server 504, media data identifying the second media item. Other examples are also possible.

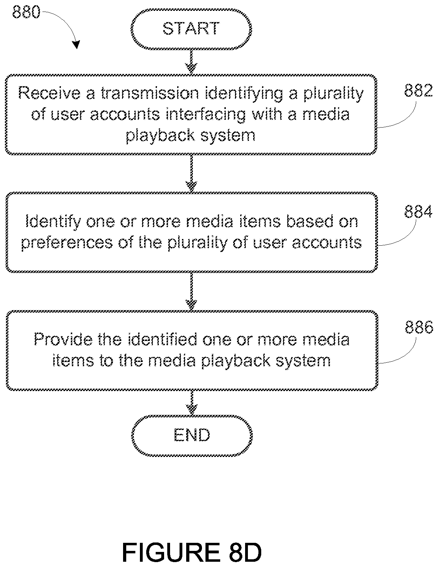

Figure 8D shows an example flow diagram of a method 880 for an embodiment in which the service provider 502 provides the media items based on the profiles of a plurality of user accounts interfacing with the media playback system 506. At block 882, the method 880 involves receiving a transmission identifying a plurality of user accounts interfacing with a media playback system. The plurality of user accounts may be the user accounts that are currently interfacing with the media playback system 506.

At block 884, the method 880 involves identifying one or more media items based on the preferences the plurality of user accounts. As one example, the service provider 502 may analyze the preferences of the identified user accounts, and based on those preferences, identify media content. Continuing with the example, if each of the preferences of the identified user accounts indicate a preference for smooth jazz music, the sever provider 502 may identify a smooth jazz song. In another example, the media items may be identified by ignoring a media item that has a negative preference associated with any of the plurality of user accounts.

In some cases, identifying common preferences between profiles may be difficult, for example, if there are a large number of users currently interfacing with the system. In such a situation, media items may be identified based on the most common preference amongst the plurality of users. As another example, the media item that has the most number of "likes" (or any other form of positive preference) across the plurality of user accounts may be identified, regardless of whether one of the plurality of user accounts has a negative preference associated with the media item.

As another example, a cumulative preference percentage for the media item may be determined. The cumulative preference percentage of the media item may be determined as a percentage of the identified user accounts that have a negative preference associated with the media item subtracted from a percentage of the identified user accounts that have a positive preference associated with the media item. As such, if eight out of 10 identified user accounts preference associated with the particular genre of music, but the remaining two identified user accounts have a negative preference associated with the particular genre of music, the cumulative preference percentage may be 80%-20% = 60%. In such a case, a media item with the highest cumulative preference percentage may be selected.

As yet another example, songs may be identified for each of the user accounts interfacing with the media playback system, identifying songs based on the preferences of that account. If any of the identified songs are common between the profiles, they can be selected for transmission. Other examples are possible as well.

At block 886, the method 880 involves providing the identified one or more media items to the media playback system. Continuing with the examples above, the one or more media items may be provided to the media playback system 506. In addition to providing the media item(s), metadata indicating why the item(s) was selected may also be included. For example, the metadata could identify characteristics common to the preferences of the plurality of user accounts. Providing such metadata will allow users of the media playback system to understand why the media items were selected.

One having ordinary skill in the art will appreciate that the examples discussed above may be applied in various media playback scenarios. For instance, the embodiments described herein are applied to a scenario in which the service provider 502 provides media items that were requested, but not specifically chosen using the first user account 508 (i.e. a selection of a catered playlist, or a radio channel, among others). In addition to the scenarios described above, embodiments herein may also be implemented and/or applied in other media playback scenarios to achieve similar or difference purposes as well, such as a parental control of media content. Other examples are also possible.

## Claims

1. A method (600, 800) comprising:
receiving (602), by a computing device (300; 504) from a first service provider (502), data including metadata, indicating a particular media item that the first service provider will be providing to a media playback system (506) for playback, wherein the particular media item is provided in response to a request, via a first user account with the first service provider, for a certain type of media content, wherein the particular media item was not specifically chosen by a user; and
based on the received data, and upon receiving the data, searching (604), by the computing device (300; 504), in a preference database associated with the media playback system (506), for a media preference associated with the media playback system (506) and corresponding to the metadata indicating the particular media item, wherein the preference database comprises preferences for media items, the media items being provided by a plurality of service providers, the plurality of service providers being used to provide media content to the media playback system; and
when a negative media preference associated with the metadata indicating the particular media item is identified, sending (608), by the computing device (300; 504) to the first service provider, an indication that the particular media item is not to be played.

2. The method of claim 1, wherein the particular media item is a first media item, the method further comprising:
receiving, by the computing device (300; 504), second data including metadata indicating that a second media item is available to be played by the media playback system (506);
based on the second data, identifying, by the computing device (300; 504), in the preference database associated with the media playback system (506), a second media preference;
based on the identified second media preference, determining, by the computing device (300; 504), that the second media item is to be played by the media playback system (506); and
causing, by the computing device (300; 504), the second media item to be played.

3. The method of any preceding claim, further comprising:
maintaining (802), by the computing device (300; 504), a plurality of user accounts associated with the media playback system (506); and
receiving (804), by the computing device (300; 504), user data identifying which of the plurality of user accounts are currently interfacing with the media playback system (506),
wherein receiving the data comprises receiving (806) media data identifying the particular media item to be played by the media playback system (506), and
wherein identifying the media preference comprises identifying (808), by the computing device (300; 504), the media preference associated with the particular media item for at least one of the plurality of user accounts that are currently interfacing with the media playback system (506).

4. The method of any preceding claim, wherein the metadata associated with the particular media item includes at least one of:
a track title;
an artist name;
a genre; and
an album name.

5. The method of one of claims 3 and 4, wherein identifying the preference data associated with the particular media item comprises:
searching the preference database for a media item entry related to the particular media item; and
identifying at least one preference corresponding to the media item entry.

6. The method of any preceding claim, wherein the method further comprises, at least one of:
sending (858) to the first service provider (502) by the computing device (300) a request for a different media item; and
sending (858) to the first service provider (502) by the computing device (300; 504), a transmission indicating a negative preference for the media item.

7. The method of any preceding claim, wherein the request for media content is based on a request for genre of music and/or based on a media preference for the genre of music that is associated with the first user account.

8. The method of any preceding claim, wherein the data identifies a service provider identification of the particular media item.

9. The method of any of claims 1 to 8, wherein the media playback system (506) comprises one or more playback devices (102, 104, 106, 108, 110, 112, 114, 116, 118, 120, 122, 124, 126, 128, 130, 200) configurable to play media content in synchrony.

10. The method of any of claims 1 to 9, wherein the particular media item is selected by the first service provider (502) based on media preferences associated with the first user account.

11. A computer readable medium comprising instructions that, when executed by a processor of a computing device, instruct the computing device to perform the method of any preceding claim.

12. A computing device (300; 504) comprising:
a processor (302);
a network interface (306); and
memory (304) having stored thereon instructions executable by the processor (302) to cause the computing device to perform the method of any of claims 1 to 10.

## Patentansprüche

1. Verfahren (600, 800), umfassend:
Empfangen (602), durch eine Rechenvorrichtung (300; 504) von einem ersten Dienstanbieter (502), von Daten einschließlich Metadaten, die ein spezifisches Medienelement angeben, das der erste Dienstanbieter einem Medienwiedergabesystem (506) für eine Wiedergabe bereitstellen wird, wobei das spezifische Medienelement als Reaktion auf eine Anforderung, über ein erstes Benutzerkonto bei dem ersten Dienstanbieter, für eine gewisse Art von Medieninhalt bereitgestellt wird, wobei das spezifische Medienelement durch einen Benutzer nicht speziell ausgewählt wurde; und
basierend auf den empfangenen Daten und nach dem Empfangen der Daten, Suchen (604), durch die Rechenvorrichtung (300; 504), in einer Präferenzdatenbank, die mit dem Medienwiedergabesystem (506) verknüpft ist, nach einer Medienpräferenz, die mit dem Medienwiedergabesystem (506) verknüpft ist und den Metadaten entspricht, die das spezifische Medienelement angeben, wobei die Präferenzdatenbank Präferenzen für Medienelemente umfasst, wobei die Medienelemente durch eine Vielzahl von Dienstleistungsanbietern bereitgestellt werden, wobei die Vielzahl von Dienstanbietern verwendet wird, um dem Medienwiedergabesystem den Medieninhalt bereitzustellen; und
wenn eine negative Medienpräferenz identifiziert wird, die mit den Metadaten verknüpft ist, die das spezifische Medienelement angeben, Senden (608), durch die Rechenvorrichtung (300; 504) an den ersten Dienstanbieter, einer Angabe, dass das spezifische Medienelement nicht wiedergegeben werden soll.

2. Verfahren nach Anspruch 1, wobei das spezifische Medienelement ein erstes Medienelement ist, das Verfahren ferner umfassend:
Empfangen, durch die Rechenvorrichtung (300; 504), von zweiten Daten, einschließlich Metadaten, die angeben, dass ein zweites Medienelement verfügbar ist, um durch das Medienwiedergabesystem (506) wiedergegeben zu werden;
basierend auf den zweiten Daten, Identifizieren, durch die Rechenvorrichtung (300; 504), in der Präferenzdatenbank, die mit dem Medienwiedergabesystem (506) verknüpft ist, einer zweiten Medienpräferenz;
basierend auf der identifizierten zweiten Medienpräferenz, Bestimmen, durch die Rechenvorrichtung (300; 504), dass das zweite Medienelement durch das Medienwiedergabesystem (506) wiedergegeben werden soll; und
Veranlassen, durch die Rechenvorrichtung (300; 504), dass das zweite Medienelement wiedergegeben wird.

3. Verfahren nach einem der vorstehenden Ansprüche, ferner umfassend:
Verwalten (802), durch die Rechenvorrichtung (300; 504), einer Vielzahl von Benutzerkonten, die mit dem Medienwiedergabesystem (506) verknüpft sind; und
Empfangen (804), durch die Rechenvorrichtung (300; 504), von Benutzerdaten, die identifizieren, welche der Vielzahl von Benutzerkonten derzeit mit dem Medienwiedergabesystem (506) verbunden sind,
wobei das Empfangen der Daten das Empfangen (806) von Mediendaten umfasst, die das spezifische Medienelement identifizieren, das durch das Medienwiedergabesystem (506) wiedergegeben werden soll, und
wobei das Identifizieren der Medienpräferenz das Identifizieren (808), durch die Rechenvorrichtung (300; 504), der Medienpräferenz umfasst, die mit dem spezifischen Medienelement für mindestens eines der Vielzahl von Benutzerkonten verknüpft ist, die derzeit mit dem Medienwiedergabesystem (506) verbunden sind.

4. Verfahren nach einem der vorstehenden Ansprüche, wobei die Metadaten, die mit dem spezifischen Medienelement verknüpft sind, mindestens eines beinhalten von:
einem Track-Titel;
einem Künstlernamen;
einem Genre; und
einem Albumnamen.

5. Verfahren nach einem der Ansprüche 3 und 4, wobei das Identifizieren der Präferenzdaten, die mit dem spezifischen Medienelement verknüpft sind, umfasst:
Durchsuchen der Präferenzdatenbank nach einem Medienelementeintrag, der sich auf das spezifische Medienelement bezieht; und
Identifizieren mindestens einer Präferenz, die dem Medienelementeintrag entspricht.

6. Verfahren nach einem der vorstehenden Ansprüche, wobei das Verfahren ferner mindestens eines umfasst von:
Senden (858) an den ersten Dienstanbieter (502) durch die Rechenvorrichtung (300) einer Anforderung für ein anderes Medienelement; und
Senden (858) an den ersten Dienstanbieter (502) durch die Rechenvorrichtung (300; 504) einer Übertragung, die eine negative Präferenz für das Medienelement angibt.

7. Verfahren nach einem der vorstehenden Ansprüche, wobei die Anforderung für den Medieninhalt auf einer Anforderung für ein Musikgenre basiert und/oder auf einer Medienpräferenz für das Musikgenre basiert, das mit dem ersten Benutzerkonto verknüpft ist.

8. Verfahren nach einem der vorstehenden Ansprüche, wobei die Daten eine Dienstanbieteridentifikation des spezifischen Medienelements identifizieren.

9. Verfahren nach einem der Ansprüche 1 bis 8, wobei das Medienwiedergabesystem (506) eine oder mehrere Wiedergabevorrichtungen (102, 104, 106, 108, 110, 112, 114, 116, 118, 120, 122, 124, 126, 128, 130, 200) umfasst, die konfigurierbar sind, um den Medieninhalt synchron abzuspielen.

10. Verfahren nach einem der Ansprüche 1 bis 9, wobei das spezifische Medienelement durch den ersten Dienstanbieter (502) basierend auf Medienpräferenzen ausgewählt wird, die mit dem ersten Benutzerkonto verknüpft sind.

11. Computerlesbares Medium, umfassend Anweisungen, die, wenn sie durch einen Prozessor einer Rechenvorrichtung ausgeführt werden, die Rechenvorrichtung anweisen, das Verfahren nach einem der vorstehenden Ansprüche durchzuführen.

12. Rechenvorrichtung (300, 504), umfassend:
einen Prozessor (302);
eine Netzwerkschnittstelle (306); und
einen Speicher (304), der Anweisungen darauf gespeichert aufweist, die durch den Prozessor (302) ausführbar sind, um die Rechenvorrichtung zu veranlassen, das Verfahren nach einem der Ansprüche 1 bis 10 durchzuführen.

## Revendications

1. Procédé (600, 800), comprenant :
la réception (602), par un dispositif informatique (300 ; 504) à partir d'un premier fournisseur de services (502), de données comportant des métadonnées, indiquant un élément multimédia particulier que le premier fournisseur de services fournira à un système de lecture multimédia (506) pour une lecture, l'élément multimédia particulier étant fourni en réponse à une demande, par l'intermédiaire d'un premier compte utilisateur auprès du premier fournisseur de services, pour un certain type de contenu multimédia, l'élément multimédia particulier n'ayant pas été spécifiquement choisi par un utilisateur ; et
sur la base des données reçues, et lors de la réception des données, la recherche (604), par le dispositif informatique (300 ; 504), dans une base de données de préférences associée au système de lecture multimédia (506), d'une préférence multimédia associée au système de lecture multimédia (506) et correspondant aux métadonnées indiquant l'élément multimédia particulier, la base de données de préférences comprenant des préférences pour des éléments multimédia, les éléments multimédia étant fournis par une pluralité de fournisseurs de services, la pluralité de fournisseurs de services étant utilisés pour fournir un contenu multimédia au système de lecture multimédia ; et
lorsqu'une préférence multimédia négative associée aux métadonnées indiquant l'élément multimédia particulier est identifiée, l'envoi (608), par le dispositif informatique (300 ; 504) au premier fournisseur de services, d'une indication que l'élément multimédia particulier ne doit pas être lu.

2. Procédé selon la revendication 1, l'élément multimédia particulier étant un premier élément multimédia, le procédé comprenant en outre :
la réception, par le dispositif informatique (300 ; 504), des secondes données comportant des métadonnées indiquant qu'un second élément multimédia est disponible pour être lu par le système de lecture multimédia (506) ;
sur la base des secondes données, l'identification, par le dispositif informatique (300 ; 504), dans la base de données de préférences associée au système de lecture multimédia (506), d'une seconde préférence multimédia ;
sur la base de la seconde préférence multimédia identifiée, la détermination, par le dispositif informatique (300 ; 504), selon laquelle le second élément multimédia doit être lu par le système de lecture multimédia (506) ; et
la provocation, par le dispositif informatique (300 ; 504), de la lecture du second élément multimédia.

3. Procédé selon l'une quelconque des revendications précédentes, comprenant en outre :
le maintien (802), par le dispositif informatique (300 ; 504), d'une pluralité de comptes d'utilisateur associés au système de lecture multimédia (506) ; et
la réception (804), par le dispositif informatique (300 ; 504), de données d'utilisateur identifiant lesquels de la pluralité de comptes d'utilisateur sont actuellement en interface avec le système de lecture multimédia (506),
la réception des données comprenant la réception (806) de données multimédia identifiant l'élément multimédia particulier à lire par le système de lecture multimédia (506), et
l'identification de la préférence multimédia comprenant l'identification (808), par le dispositif informatique (300 ; 504), de la préférence multimédia associée à l'élément multimédia particulier pour au moins l'un de la pluralité de comptes utilisateur qui sont actuellement en interface avec le système de lecture multimédia (506).

4. Procédé selon l'une quelconque des revendications précédentes, les métadonnées associées à l'élément multimédia particulier comportant :
un titre de piste ; et/ou
un nom d'artiste ; et/ou
un genre ; et/ou
un nom d'album.

5. Procédé selon l'une des revendications 3 et 4, l'identification des données de préférence associées à l'élément multimédia particulier comprenant :
la recherche dans la base de données de préférences d'une entrée d'élément multimédia liée à l'élément multimédia particulier ; et
l'identification d'au moins une préférence correspondant à l'entrée d'élément multimédia.

6. Procédé selon l'une quelconque des revendications précédentes, le procédé comprenant en outre :
l'envoi (858) au premier fournisseur de services (502) par le dispositif informatique (300) d'une demande pour un élément multimédia différent ; et/ou
l'envoi (858) au premier fournisseur de services (502) par le dispositif informatique (300 ; 504), d'une transmission indiquant une préférence négative pour l'élément multimédia.

7. Procédé selon l'une quelconque des revendications précédentes, la demande de contenu multimédia étant basée sur une demande de genre de musique et/ou basée sur une préférence multimédia pour le genre de musique qui est associé au premier compte utilisateur.

8. Procédé selon l'une quelconque des revendications précédentes, les données identifiant une identification de fournisseur de services de l'élément multimédia particulier.

9. Procédé selon l'une quelconque des revendications 1 à 8, le système de lecture multimédia (506) comprenant un ou plusieurs dispositifs de lecture (102, 104, 106, 108, 110, 112, 114, 116, 118, 120, 122, 124, 126, 128, 130, 200) pouvant être configurés pour lire du contenu multimédia de manière synchrone.

10. Procédé selon l'une quelconque des revendications 1 à 9, l'élément multimédia particulier étant sélectionné par le premier fournisseur de services (502) sur la base des préférences multimédia associées au premier compte utilisateur.

11. Support lisible par ordinateur comprenant des instructions qui, lorsqu'elles sont exécutées par un processeur d'un dispositif informatique, donnent instruction au dispositif informatique de réaliser le procédé de l'une quelconque des revendications précédentes.

12. Dispositif informatique (300 ; 504) comprenant :
un processeur (302) ;
une interface réseau (306) ; et
une mémoire (304) sur laquelle sont stockées des instructions exécutables par le processeur (302) pour amener le dispositif informatique à réaliser le procédé selon l'une quelconque des revendications 1 à 10.
